(19) Europäisches Patentamt
European Patent Office
Office européen des brevets

(11) **EP 4 517 885 A1**

## (12) EUROPEAN PATENT APPLICATION
published in accordance with Art. 153(4) EPC

(43) Date of publication:
**05.03.2025 Bulletin 2025/10**

(21) Application number: **22953437.5**

(22) Date of filing: **01.08.2022**

(51) International Patent Classification (IPC):
**H01M 4/64** $^{(2006.01)}$     **H01M 4/13** $^{(2010.01)}$

(52) Cooperative Patent Classification (CPC):
**H01M 4/13; H01M 4/139; H01M 4/64**

(86) International application number:
**PCT/CN2022/109449**

(87) International publication number:
**WO 2024/026620 (08.02.2024 Gazette 2024/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Contemporary Amperex Technology
Co., Limited
Ningde, Fujian 352100 (CN)**

(72) Inventors:
• **WANG, Manman
Ningde, Fujian 352100 (CN)**
• **GE, Xiaoming
Ningde, Fujian 352100 (CN)**
• **OUYANG, Chuying
Ningde, Fujian 352100 (CN)**

(74) Representative: **Gong, Jinping
CocreateIP
Neumarkterstr. 21
81673 München (DE)**

(54) **CONDUCTING FILM AND PREPARATION METHOD THEREFOR, ELECTRODE, CURRENT COLLECTOR, SECONDARY BATTERY AND DEVICE**

(57) This application provides a conductive film. The conductive film includes: a substrate, where the substrate has a first surface and a second surface facing away from each other, and the substrate has a dense structure; and a first porous layer, where the first porous layer is stacked and bonded to the first surface of the substrate; the first porous layer includes a porous conductive material; and the porous conductive material has pores with first pore size and pores with second pore size, the first pore size being n micrometers, where $0.5 \leq n \leq 10$; and the second pore size being m nanometers, where $20 < m < 200$.

FIG. 1

**EP 4 517 885 A1**

**Description**

**TECHNICAL FIELD**

This application relates to the technical field of metal materials, and in particular, to a conductive film, a preparation method thereof, an electrode, a current collector, a secondary battery, and an apparatus.

**BACKGROUND**

In recent years, with increasingly wide use of secondary batteries, secondary batteries have been widely used in energy storage power supply systems such as hydroelectric, thermal, wind, and solar power plants, and many other fields including electric tools, electric bicycles, electric motorcycles, electric vehicles, military equipment, and aerospace. Due to great development of secondary batteries, higher requirements are imposed on energy density, cycling performance, and the like of secondary batteries.

Metal lithium is considered as an attractive negative electrode material for high-energy lithium-ion batteries due to its high theoretical specific capacity (3860 mAh/g) and low electrochemical potential. However, batteries using metal lithium as negative electrode have the following problems during cycling: growth of lithium dendrites, chemical reactions with electrolyte, and unlimited swelling of volume of lithium negative electrode during deposition and peeling. These problems are bound to bring about battery safety hazards and low cycling efficiency, seriously impeding the practical application of metal lithium negative electrodes.

**SUMMARY**

This application has been made in view of the foregoing problems, with an objective to provide a novel conductive film, a preparation method thereof, an electrode, a current collector, a secondary battery, and an apparatus.

The novel conductive film of this application has a substrate and a porous layer that are stacked and bonded. The porous layer includes an innovative porous conductive material, and such porous conductive material has a unique multi-level pore size distribution characteristic. When the conductive film is used as an electrode or current collector of a secondary battery, the porous conductive material facilitates infiltration of electrolyte and deposition of active substances. The substrate of the conductive film can support the porous layer and enhance strength of the conductive film. The conductive film of this application has both good mechanical performance and electrochemical performance.

In view of this, according to a first aspect, this application provides a conductive film. The conductive film includes:

a substrate, where the substrate has a first surface and a second surface facing away from each other, and the substrate has a dense structure; and
a first porous layer, where the first porous layer is stacked and bonded to the first surface of the substrate;
the first porous layer includes a porous conductive material; and
the porous conductive material has pores with first pore size and pores with second pore size,
the first pore size being n micrometers, where $0.5 \leq n \leq 10$; and
the second pore size being m nanometers, where $20 < m < 200$.

The conductive film in the foregoing solution has the substrate and the porous layer that are stacked and bonded. Due to the porous structure, the porous layer has relatively low mechanical strength. In the foregoing solution, the substrate with a dense structure and the porous layer are stacked and bonded to obtain a porous conductive film with improved mechanical performance. The substrate with a dense structure has good mechanical performance, and the porous layer with the unique porous structure shows good electrochemical performance when used in a secondary battery. The conductive film has both improved mechanical performance and electrochemical performance and is suitable for use as an electrode/current collector of a secondary battery.

The conductive film in the foregoing solution has a novel porous conductive material, and such porous conductive material has a novel multi-level pore size distribution characteristic. This novel porous conductive material is particularly suitable for use in an anode-free (anode free) metal battery (for example, an anode-free lithium metal battery or an anode-free sodium metal battery) or a battery containing an active metal/alloy negative electrode. Inner walls of the pores with first pore size (referred to as macropores) can serve as a substrate for deposition of active substances. In addition, the macropores also serve to provide electrolyte infiltration channels. Inner walls of the pores with second pore size (referred to as small pores) can serve as a substrate for deposition of active substances. The small pores increase specific surface area of the material, so that the porous conductive material can accommodate more active substances. In addition, the small pores also serve as a template for deposition of active substances. Specifically, limited by the size of the small pores, the active substances deposited in the small pores are nanoscale, and the nanoscale active substances have high ionic conductivity due to the small size, which can improve overall ionic conductivity of the electrode, and in turn improve rate performance of the battery, ultimately improving the overall capacity, cycling stability, and rate performance of the battery. In addition, the small pores also serve to suppress volume swelling of the active material, avoiding pulverization and failure of the active material.

In some embodiments, the conductive film further includes a second porous layer, where the second porous layer is stacked and bonded to the second surface of the substrate; the first porous layer and the second porous layer each independently include a porous conductive material; and the porous conductive material has pores with first pore size and pores with second pore size, the first pore size being n micrometers, where $0.5 \leq n \leq 10$; and the second pore size being m nanometers, where $20 < m < 200$. The conductive film based on this solution has the porous layer on both surfaces, and both sides of the conductive film can serve as current collector surfaces of the active substances. With such conductive film used in a secondary battery, the secondary battery shows improved capacity, cycling stability, and/or rate performance.

In some embodiments, an apparent volume of the porous conductive material is V, a total pore volume of the pores with first pore size is $V_1$, a total pore volume of the pores with second pore size is $V_2$, and the porous conductive material satisfies the following relation: $(V_1 + V_2)/V = 600/0\text{-}90\%$. The conductive film based on this solution has satisfactory strength. With such conductive film used in a secondary battery, the secondary battery shows improved capacity, cycling stability, and/or rate performance.

In some embodiments, an apparent volume of the porous conductive material is V, a total pore volume of the pores with first pore size is $V_1$, and the porous conductive material satisfies the following relation: $V_1/V = 5\%\text{-}70\%$. The conductive film based on this solution has satisfactory strength. With such conductive film used in a secondary battery, the secondary battery shows improved capacity, cycling stability, and/or rate performance.

In some embodiments, an apparent volume of the porous conductive material is V, a total pore volume of the pores with second pore size is $V_2$, and the porous conductive material satisfies the following relation: $V_2/V = 15\%\text{-}70\%$. The conductive film based on this solution has satisfactory strength. With such conductive film used in a secondary battery, the secondary battery shows improved capacity, cycling stability, and/or rate performance.

In some embodiments, adjacent pores with first pore size are separated by a first ligament, an average ligament diameter of the first ligament being $0.89\ \mu m\text{-}3\ \mu m$. The conductive film based on this solution has satisfactory strength. With such conductive film used in a secondary battery, the secondary battery shows improved capacity, cycling stability, and/or rate performance.

In some embodiments, adjacent pores with second pore size are separated by a second ligament, an average ligament diameter of the second ligament being 27 nm-100 nm. The conductive film based on this solution has satisfactory strength. With such conductive film used in a secondary battery, the secondary battery shows improved capacity, cycling stability, and/or rate performance.

In some embodiments, total specific surface area of the pores with first pore size is $0.08\ m^2/g\text{-}1.32\ m^2/g$. The conductive film based on this solution has satisfactory strength. With such conductive film used in a secondary battery, the secondary battery shows improved capacity, cycling stability, and/or rate performance.

In some embodiments, total specific surface area of the pores with second pore size is $0.87\ m^2/g\text{-}5.25\ m^2/g$. The conductive film based on this solution has satisfactory strength. With such conductive film used in a secondary battery, the secondary battery shows improved capacity, cycling stability, and/or rate performance.

In some embodiments, specific surface area of the porous conductive material is $0.95\ m^2/g\text{-}6.57\ m^2/g$. The conductive film based on this solution has satisfactory strength. With such conductive film used in a secondary battery, the secondary battery shows improved capacity, cycling stability, and/or rate performance.

In some embodiments, thickness of the substrate is $4.5\ \mu m\text{-}12\ \mu m$. The conductive film based on this solution has satisfactory strength. With such conductive film used in a secondary battery, the secondary battery shows improved capacity, cycling stability, and/or rate performance.

In some embodiments, thickness of the first porous layer is $50\ \mu m\text{-}200\ \mu m$. The conductive film based on this solution has satisfactory strength. With such conductive film used in a secondary battery, the secondary battery shows improved capacity, cycling stability, and/or rate performance.

In some embodiments, thickness of the second porous layer is $50\ \mu m\text{-}200\ \mu m$. The conductive film based on this solution has satisfactory strength. With such conductive film used in a secondary battery, the secondary battery shows improved capacity, cycling stability, and/or rate performance.

In some embodiments, the porous conductive material is made from an elemental metal or alloy containing element M, the element M being selected from copper, aluminum, or a combination thereof. The conductive film based on this solution has satisfactory strength. With such conductive film used in a secondary battery, the secondary battery shows improved capacity, cycling stability, and/or rate performance.

In some embodiments, the substrate has a tensile strength of $330\ N/m^2$ or above. The conductive film based on this solution has satisfactory strength. With such conductive film used in a secondary battery, the secondary battery shows improved capacity, cycling stability, and/or rate performance.

In some embodiments, the conductive film has a tensile strength of $100\ N/m^2$ or above. The conductive film based on this solution has satisfactory strength. With such conductive film used in a secondary battery, the secondary battery shows improved capacity, cycling stability, and/or rate performance.

In some embodiments, the material having a dense structure indicates that an apparent density of the material is substantially equal to an actual density. For example, the apparent density is equal to 90% or above of the actual density, such as 95% or above, or 100%.

According to a second aspect, this application provides a preparation method of conductive film, where the conductive film is defined according to any one of the foregoing solutions, and the preparation method includes:

(1) providing a first raw material multi-layer body, the first raw material multi-layer body including:

a raw material substrate, where the raw material substrate has a first surface and a second surface facing away from each other, and the raw material substrate has a dense structure;
a first A alloy layer, where the first A alloy layer is stacked and bonded to the first surface of the raw material substrate, the first A alloy layer is made from a multi-phase alloy, and the multi-phase alloy contains $\alpha$Mn phase and (M, $\gamma$Mn) phase, the element M being selected from copper, aluminum, or a combination thereof; and
optionally, a first B alloy layer, where the first B alloy layer is stacked and bonded to the second surface of the raw material substrate, the first B alloy layer is made from a multi-phase alloy, and the multi-phase alloy contains $\alpha$Mn phase and (M, $\gamma$Mn) phase, the element M being selected from copper, aluminum, or a combination thereof; and

(2) removing at least a portion of the element Mn from the $\alpha$Mn phase of the multi-phase alloy and at least a portion of the element Mn from the (M, $\gamma$Mn) phase of the multi-phase alloy by dealloying;
where the raw material substrate is configured to remain intact during the dealloying treatment.

The foregoing method skillfully uses different chemical reactions of the $\alpha$Mn phase and the (M, $\gamma$Mn) phase in the multi-phase alloy during dealloying, where the $\alpha$Mn phase is removed during dealloying to form the pores with first pore size and the element Mn in the (M, $\gamma$Mn) phase is removed during dealloying to form the pores with second pore size, thereby obtaining the conductive film with the novel porous structure of this application.

In some embodiments, the preparation method of conductive film in this application further includes a step of preparing the first raw material multi-layer body. The step specifically includes:

(1) providing a second raw material multi-layer body, the second raw material multi-layer body including:

a raw material substrate, where the raw material substrate has a first surface and a second surface facing away from each other, and the raw material substrate has a dense structure;
a second A alloy layer, where the second A alloy layer is stacked and bonded to the first surface of the raw material substrate, and the second A alloy layer contains (M, $\gamma$Mn) phase; and
optionally, a second B alloy layer, where the second B alloy layer is stacked and bonded to the first surface of the raw material substrate, and the second B alloy layer contains (M, $\gamma$Mn) phase; and

(2) performing phase-separation heat treatment on the product of the previous step to form a multi-phase alloy in the second A alloy layer and/or the second B alloy layer, the multi-phase alloy containing $\alpha$Mn phase and (M, $\gamma$Mn) phase, to obtain the first raw material multi-layer body.

In some embodiments, temperature of the phase-separation heat treatment is 500°C-700°C.

In some embodiments, time of the phase-separation heat treatment is 1 hour-4 hours.

In some embodiments, cooling is performed at a cooling speed of 20°C/s-1000°C/s after the phase-separation heat treatment.

According to a second aspect, this application provides a current collector including the conductive film according to any one of the foregoing embodiments.

According to a third aspect, this application provides a secondary battery including the current collector according to any one of the foregoing embodiments; where

in some embodiments, the secondary battery is an anode-free metal battery; and
in some embodiments, negative electrode active material of the secondary battery contains a metal or an alloy.

According to a fourth aspect, this application provides an apparatus including the secondary battery according to any one of the foregoing embodiments, where the secondary battery supplies electric energy to the apparatus.

Beneficial effects

One or more embodiments of this application have one or more of the following beneficial effects.

(1) The conductive film has a structure of the stacked substrate and porous layer, where the substrate has good tensile strength, provides good support for the porous layer, and improves overall tensile strength of the conductive film.

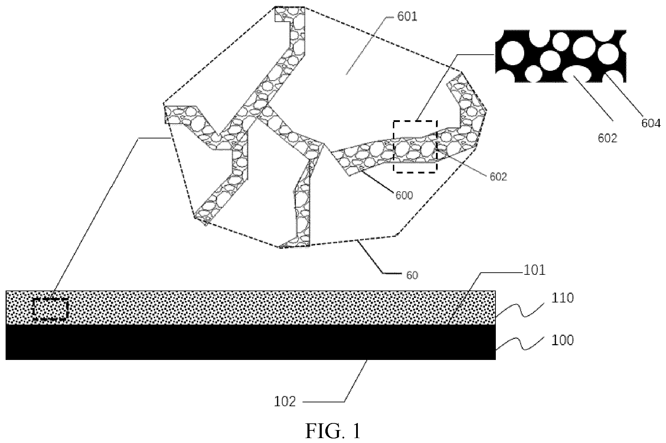

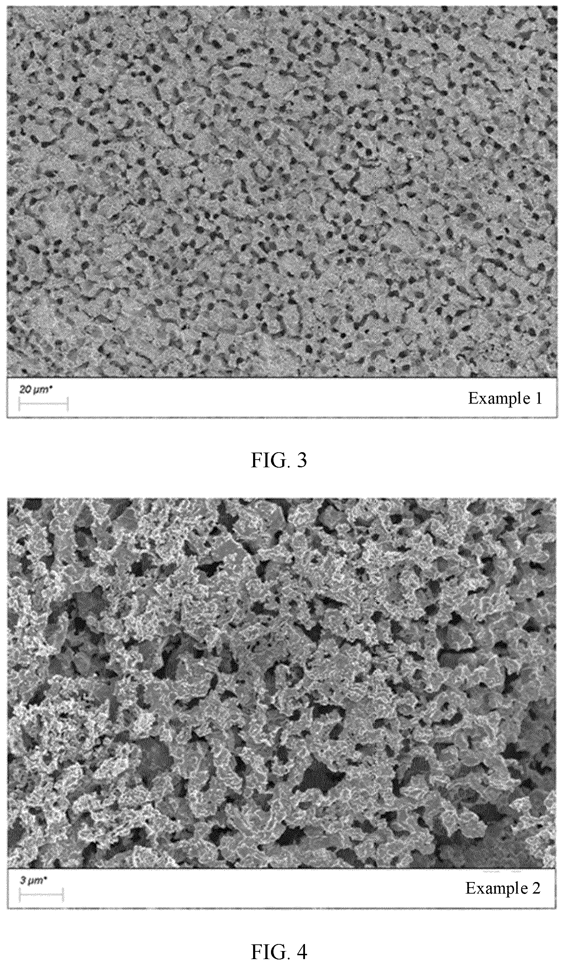

(2) FIG. 3 to FIG. 5 show scanning electron microscope images of porous conductive materials in examples and FIG. 1 is a schematic diagram of a porous conductive material. In the porous layer of the conductive film of this application, the porous conductive material has pores with first pore size and pores with second pore size. Inner walls of the pores with first pore size (referred to as macropores) can serve as a substrate for deposition of active substances. In addition, the macropores also serve to provide electrolyte infiltration channels. Inner walls of the pores with second pore size (referred to as small pores) can serve as a substrate for deposition of active substances. The small pores increase specific surface area of the material, so that the porous conductive material can accommodate more active substances. In addition, the small pores also serve as a template for deposition of active substances. Specifically, limited by the size of the small pores, the active substances deposited in the small pores are nanoscale, and the nanoscale active substances have high ionic conductivity due to the small size, which can improve overall ionic conductivity of the electrode, and in turn improve rate performance of the battery, ultimately improving the overall capacity, cycling stability, and rate performance of the battery. In addition, the small pores also serve to suppress volume swelling of the active material, avoiding pulverization and failure of the active material.

(3) This application skillfully uses the property of a multi-phase alloy to prepare the porous layer of the conductive film. According to a Mn-Cu binary alloy phase diagram, a Mn-Cu binary alloy (with a percentage of Mn being 60at.0/0-90at.%) is an (M, $\gamma$Mn) single-phase structure within a temperature range of 700°C-865°C, while it is an $\alpha/\gamma$ dual-phase structure within a temperature range of 500°C-700°C. Therefore, the Mn-Cu alloy prepared by melting can be first annealed at high temperature (700°C-865°C) to obtain an (M, $\gamma$Mn) single-phase alloy with excellent plasticity processing capability, which is used to prepare precursor alloys of different shapes. Subsequently, an aging treatment at low temperature (500°C-700°C) is performed to form an $\alpha/\gamma$ dual-phase structure, which is used to prepare a final porous conductive material.

(4) In the method for preparing the porous conductive material, composition of the second A alloy layer/second B alloy layer is mainly (M, $\gamma$Mn) phase, which has good plasticity and can be processed into processed products of different shapes and sizes by plastic processing (forging, rolling, drawing, and the like). Subsequent phase-separation heat treatment and dealloying operations on the processed products are unlikely to change the shapes and sizes of the processed products. The method in this application enables the dealloyed product to maintain the shape and size of the parent body, thereby facilitating preparation of a large-sized conductive film.

(5) The method in this application can flexibly adjust the pore sizes and percentages of the pores with second pore size and the pores with first pore size in the porous conductive material. For example, adjusting the temperature and time of the phase-separation heat treatment can control the percentage and size of the $\alpha$Mn phase in the second product, thereby controlling the percentage and pore size of the pores with first pore size in the porous conductive material. For another example, adjusting temperature of dealloying corrosion can control the percentage and pore size of the pores with second pore size in the porous conductive material.

## BRIEF DESCRIPTION OF DRAWINGS

FIG. 1 is a schematic diagram and partially enlarged view of a conductive film according to some embodiments of this application.

FIG. 2 is a schematic diagram and cross-sectional scanning electron microscope image of a conductive film according to some embodiments of this application.

FIG. 3 is a scanning electron microscope image of a first porous layer of a conductive film in Example 1 of this application.

FIG. 4 is a scanning electron microscope image of a first porous layer of a conductive film in Example 2 of this application.

FIG. 5 is a scanning electron microscope image of a first porous layer of a conductive film in Example 3 of this application.

FIG. 6 is a binary phase diagram of a Mn-Cu alloy.

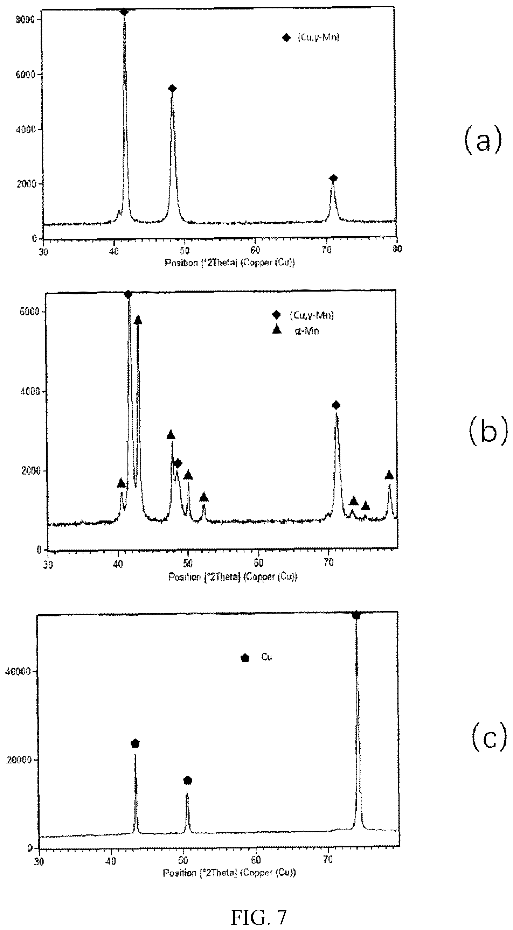

(a) of FIG. 7 is an XRD pattern of a second A alloy layer according to some embodiments of this application; (b) of FIG. 7 is an XRD pattern of a first A alloy layer according to some embodiments of this application; and (c) of FIG. 7 is an XRD pattern of a first porous layer according to some embodiments of this application.

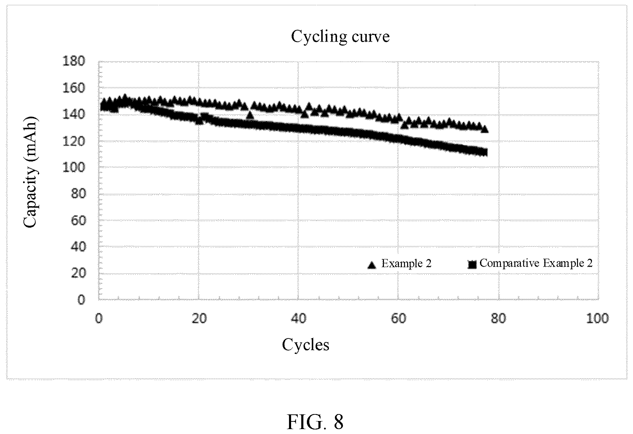

FIG. 8 is cycles-capacity curves of secondary batteries containing conductive films in Example 2 and Comparative Example 2.

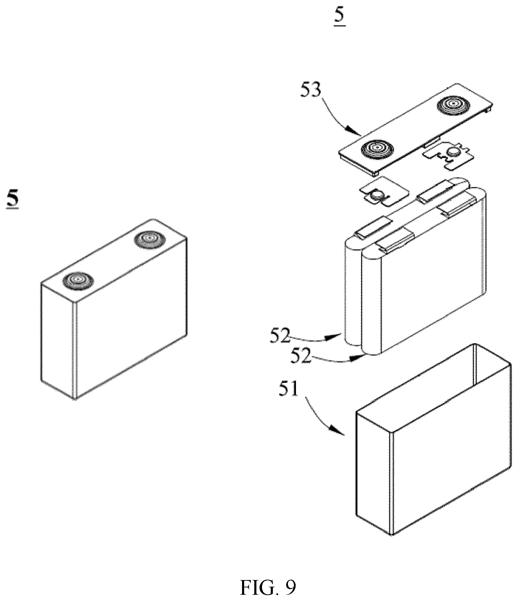

FIG. 9 is an overall diagram and exploded view of a secondary battery according to an embodiment of this application.

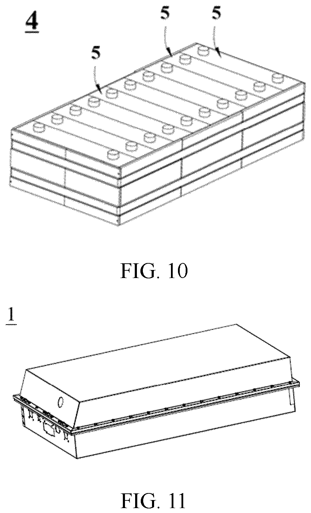

FIG. 10 is a schematic diagram of a battery module according to an embodiment of this application.

FIG. 11 is a schematic diagram of a battery pack according to an embodiment of this application.

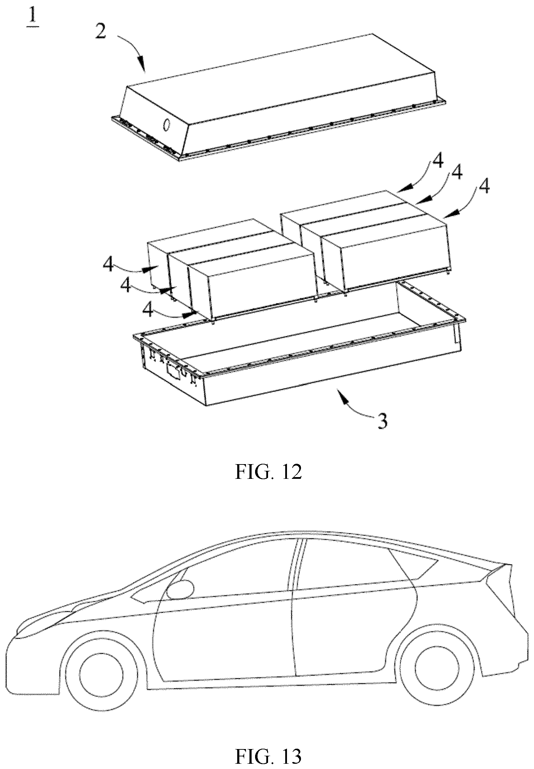

FIG. 12 is an exploded view of the battery pack according to the embodiment of this application in FIG. 11.

FIG. 13 is a schematic diagram of an apparatus using a secondary battery as a power source according to an embodiment of this application.

Description of reference signs:

1. battery pack; 2. upper box body; 3. lower box body; 4. battery module; 5. secondary battery; 51. housing; 52. electrode assembly; 53. top cover assembly; 200. substrate; 101. first surface; 102. second surface; 110. first porous layer; 120. second porous layer; 60. porous conductive material; 601. pore with first pore size; 600. first ligament; 602. pore with second pore size; and 604. second ligament.

## DESCRIPTION OF EMBODIMENTS

The following specifically discloses in detail embodiments of the conductive film, preparation method thereof, electrode, current collector, secondary battery, and apparatus of this application, with appropriate reference to the accompanying drawings. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

Unless otherwise specified, a porous layer refers to a first porous layer, a second porous layer, or a combination thereof.

Unless otherwise specified, the first porous layer and the second porous layer may have the same or different materials, the same or different compositions, the same or different pore size distribution characteristics, the same or different sizes, and the same or different thicknesses.

[Conductive film]

In some embodiments, this application provides a conductive film. The conductive film includes:

a substrate, where the substrate has a first surface and a second surface facing away from each other, and the substrate has a dense structure; and
a first porous layer, where the first porous layer is stacked and bonded to the first surface of the substrate;
the first porous layer includes a porous conductive material; and
the porous conductive material has pores with first pore size and pores with second pore size,
the first pore size being n micrometers, where $0.5 \leq n \leq 10$; and
the second pore size being m nanometers, where $20 < m < 200$.

The conductive film in the foregoing solution has the substrate and the porous layer that are stacked and bonded. Due to the porous structure, the porous layer has relatively low mechanical strength. A substrate with good tensile performance (for example, with a tensile strength of 330 N/mm$^2$ or above) and a porous layer are stacked and bonded together to obtain a multi-layer conductive film. Such conductive film has both improved mechanical performance and the porous structure, and is suitable for use as a current collector of a secondary battery.

In some embodiments, the term "stacked and bonded" means that the substrate and the porous layer are bonded through chemical bonds (for example, metal bonds) at the position where they are stacked. Bonding strength between the substrate and the porous layer can be tested through a tape peel test, where a tape is adhered to a surface of the porous layer and then peeled off. The bonding strength between the substrate and the porous layer can withstand tape peeling with $\sigma_{180°}$ of 7 N/mm or above, without causing falling-off of the porous layer.

In some embodiments, the term "conductive film" refers to a conductivity of 10$^3$ (S/cm) or above, for example, 10$^5$ (S/cm) or above or 10$^7$ (S/cm) or above, in a face direction or thickness direction of the film.

In some embodiments, the substrate is a dense structure, and a porosity of the substrate is, for example, zero.

The conductive film in the foregoing solution has a porous conductive material, and such porous conductive material has an innovative multi-level pore size distribution characteristic. This novel porous conductive material is particularly suitable for use in an anode-free (anode free) metal battery (for example, an anode-free lithium metal battery or an anode-free sodium metal battery) or a battery containing an active metal/alloy negative electrode. Inner walls of the pores with first pore size (referred to as macropores) can serve as a substrate for deposition of active substances. In addition, the macropores also serve to provide electrolyte infiltration channels. Inner walls of the pores with second pore size (referred to as small pores) can serve as a substrate for deposition of active substances. The small pores increase specific surface area of the material, so that the porous conductive material can accommodate more active substances. In addition, the small pores also serve as a template for deposition of active substances. Specifically, limited by the size of the small pores, the active substances deposited in the small pores are nanoscale, and the nanoscale active substances have high ionic conductivity due to the small size, which can improve overall ionic conductivity of the electrode, and in turn improve rate performance of the battery, ultimately improving the overall capacity, cycling stability, and rate performance of the battery. In addition, the small pores also serve to suppress volume swelling of the active material, avoiding pulverization and failure of the active material.

FIG. 1 is a schematic diagram of a conductive film according to an embodiment. The conductive film includes a substrate 100 and a first porous layer 110. The substrate 100 has a first surface 101 and a second surface 102 facing away from each other, and the substrate 100 has a tensile strength of 100 MPa or above; the first porous layer 110 is stacked and bonded to the first surface 101 of the substrate 110; and the first porous layer 110 is made from a porous conductive material.

A dashed-line box on the first porous layer 110 is enlarged to show a porous conductive material 60. The porous conductive material 60 has a macroporous structure, the macroporous structure has pores 601 with first pore size, and adjacent pores 601 with first pore size are separated by a first ligament 600. A dashed-line box on the first ligament 600 is enlarged to show the first ligament 600. The first ligament 600 has a small porous structure, the small porous structure has pores 602 with second pore size, and adjacent pores 602 with second pore size are separated by a second ligament 604.

The porous conductive material based on the foregoing solution has an innovative multi-level pore size distribution characteristic. This novel porous conductive material is particularly suitable for use in an anode-free (anode free) metal battery (for example, an anode-free lithium metal battery or an anode-free sodium metal battery) or a battery containing a metal or alloy negative electrode. Inner walls of the pores with first pore size (referred to as macropores) can serve as a substrate for deposition of active substances. In addition, the macropores also serve to provide electrolyte infiltration channels. Inner walls of the pores with second pore size (referred to as small pores) can serve as a substrate for deposition of active substances. The small pores increase specific surface area of the material, so that the porous conductive material can accommodate more active substances. In addition, the small pores also serve as a template for deposition of active substances. Specifically, limited by the size of the small pores, the active substances deposited in the small pores are nanoscale, and the nanoscale active substances have high ionic conductivity due to the small size, which can improve overall ionic conductivity of the electrode, and in turn improve rate performance of the battery, ultimately improving the overall capacity, cycling stability, and rate performance of the battery. In addition, the small pores also serve to suppress volume swelling of the active material, avoiding pulverization and failure of the active material.

In some embodiments, the first pore size is n micrometers, where $0.5 \leq n \leq 10$; and the value of n may be 0.5-1, 1-2, 2-3, 3-4, 4-5, 5-6, 6-7, 7-8, 8-9, or 9-10. Compared to larger pores (300 $\mu$m-700 $\mu$m), 0.5 $\mu$m-10 $\mu$m pores allow the battery to have improved extractable capacity, cycling stability, and rate performance (decreased particle size of the active substance can improve the ionic conductivity of the electrode material, and in turn enhance the overall conductivity of the electrode and improve the rate performance of the battery). In addition, in combination with nanopores with a small pore size, specific surface area of a metal current collector can be further increased, and thus more active substances can be accommodated.

In some embodiments, the second pore size is m nanometers, where $20 < m < 200$; and the value of m may be 20-40, 40-60, 60-80, 80-100, 100-120, 120-140, 140-160, 160-180, or 180-200.

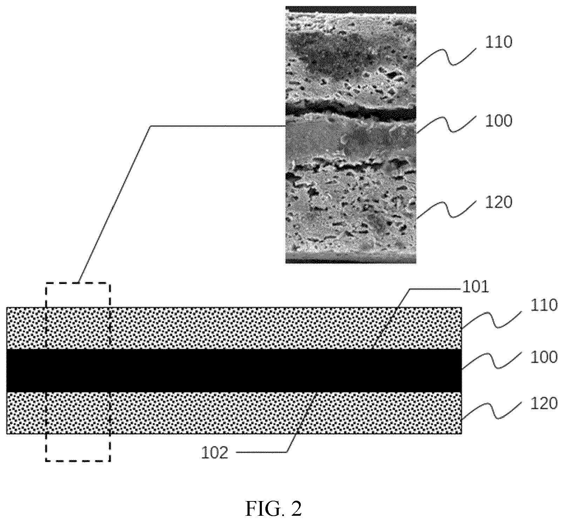

FIG. 2 is a schematic diagram of a conductive film according to some other embodiments of this application. In some embodiments, referring to FIG. 2, the conductive film further includes a second porous layer 120, where the second porous layer 120 is stacked and bonded to the second surface 102 of the substrate 100. The first porous layer 110 and the second porous layer 120 each independently include a porous conductive material; and the porous conductive material has pores with first pore size and pores with second pore size, the first pore size being n micrometers, where $0.5 \leq n \leq 10$; and the second pore size being m nanometers, where $20 < m < 200$. The conductive film based on this solution has the porous layer on both surfaces, and both sides of the conductive film can serve as current collector surfaces of the active substances. With such conductive film used in a secondary battery, the secondary battery shows improved capacity, cycling stability, and/or rate performance.

In some embodiments, an apparent volume of the porous conductive material is V, a total pore volume of the pores with first pore size is $V_1$, a total pore volume of the pores with second pore size is $V_2$, and the porous conductive material satisfies the following relation: $(V1 + V2)/V = 600/0\text{-}90\%$. In some embodiments, the value of $(V_1 + V_2)/V$ is 20%-30%, 30%-40%, 40%50%, 50%-60%, 60%-70%, 70% 80%, or 80%-90%. In some embodiments, $V = V_1 + V_2$. The conductive film based on this solution has satisfactory strength. With such conductive film used in a secondary battery, the secondary battery shows improved capacity, cycling stability, and/or rate performance.

In some embodiments, an apparent volume of the porous conductive material is V, a total pore volume of the pores with first pore size is $V_1$, and the porous conductive material satisfies the following relation: $V_1/V = 5\%\text{-}70\%$. In some embodiments, the value of $V_1/V$ is 5%15%, 10%15%, 15%--20%, 20%-30%, 30%-40%, 40%-50%, 50%-60%, or 60%-70%. The conductive film based on this solution has satisfactory strength. With such conductive film used in a secondary battery, the secondary battery shows improved capacity, cycling stability, and/or rate performance.

In some embodiments, an apparent volume of the porous conductive material is V, a total pore volume of the pores with second pore size is $V_2$, and the porous conductive material satisfies the following relation: $V_2/V = 15\%\text{-}70\%$. In some embodiments, the value of $V_2/V$ is 15%-20%, 20%--30%, 30%-40%, 40%-50%, 50%-60%, or 60%-70%. The conductive film based on this solution has satisfactory strength. With such conductive film used in a secondary battery, the secondary battery shows improved capacity, cycling stability, and/or rate performance.

In some embodiments, adjacent pores with first pore size are separated by a first ligament, an average ligament diameter of the first ligament being 0.89 $\mu$m-3 $\mu$m (for example, 1 $\mu$m-1.5 $\mu$m, 1.5 $\mu$m-2 $\mu$m, 2 $\mu$m-2.5 $\mu$m, or 2.5 $\mu$m-3 $\mu$m). The conductive film based on this solution has satisfactory strength. With such conductive film used in a secondary battery, the secondary battery shows improved capacity, cycling stability, and/or rate performance.

In some embodiments, adjacent pores with second pore size are separated by a second ligament, an average ligament diameter of the second ligament being 27 nm-100 nm (for example, 30 nm-40 nm, 40 nm-50 nm, 50 nm-60 nm, 60 nm-70 nm, 70 nm-80 nm, 80 nm-90 nm, or 90 nm-100 nm). The conductive film based on this solution has satisfactory strength. With such conductive film used in a secondary battery, the secondary battery shows improved capacity, cycling stability, and/or rate performance.

In some embodiments, total specific surface area of the pores with first pore size is 0.08 m²/g-1.32 m²/g (for example, 0.1 m²/g-0.3 m²/g, 0.3 m²/g-0.5 m²/g, 0.5 m²/g-0.7 m²/g, 0.7 m²/g-0.9 m²/g, 0.9 m²/g-1.1 m²/g, or 1.1 m²/g-1.3 m²/g). The conductive film based on this solution has satisfactory strength. With such conductive film used in a secondary battery, the secondary battery shows improved capacity, cycling stability, and/or rate performance.

In some embodiments, total specific surface area of the pores with second pore size is 0.87 m²/g-5.25 m²/g (for example, 1 m²/g-1.5 m²/g, 1.5 m²/g-2 m²/g, 2 m²/g-2.5 m²/g, 2.5 m²/g-3 m²/g, 3 m²/g-3.5 m²/g, 3.5 m²/g-4 m²/g, 4 m²/g-4.5 m²/g, or 4.5 m²/g-5 m²/g). The conductive film based on this solution has satisfactory strength. With such conductive film used in a secondary battery, the secondary battery shows improved capacity, cycling stability, and/or rate performance.

In some embodiments, specific surface area of the porous conductive material is 0.95 m²/g-6.57 m²/g (for example, 1 m²/g-1.5 m²/g, 1.5 m²/g-2 m²/g, 2 m²/g-2.5 m²/g, 2.5 m²/g-3 m²/g, 3 m²/g-3.5 m²/g, 3.5 m²/g-4 m²/g, 4 m²/g-4.5 m²/g, 4.5 m²/g-5 m²/g, 5 m²/g-5.5 m²/g, or 5.5 m²/g-6 m²/g). The specific surface area of the porous conductive material may be, for example, equal to a sum of the total specific surface area of the pores with first pore size and the total specific surface area of the pores with second pore size. The conductive film based on this solution has satisfactory strength. With such conductive film used in a secondary battery, the secondary battery shows improved capacity, cycling stability, and/or rate performance.

In some embodiments, thickness of the substrate is 4.5 μm-12 μm, for example, 4.5 μm-6 μm, 6 μm-8 μm, 8 μm-10 μm, or 10 μm-12 μm. The conductive film based on this solution has satisfactory strength. With such conductive film used in a secondary battery, the secondary battery shows improved capacity, cycling stability, and/or rate performance.

In some embodiments, thickness of the first porous layer is 50 μm-200 μm, for example, 50 μm-100 μm, 100 μm-150 μm, or 150 μm-200 μm. The conductive film based on this solution has satisfactory strength. With such conductive film used in a secondary battery, the secondary battery shows improved capacity, cycling stability, and/or rate performance.

In some embodiments, thickness of the second porous layer is 50 μm-200 μm, for example, 50 μm-100 μm, 100 μm-150 μm, or 150 μm-200 μm. The conductive film based on this solution has satisfactory strength. With such conductive film used in a secondary battery, the secondary battery shows improved capacity, cycling stability, and/or rate performance.

In some embodiments, total thickness of the conductive film is 50 μm-450 μm. The total thickness of the conductive film may be, for example, 50 μm-100 μm, 100 μm-150 μm, 150 μm-200 μm, 200 μm-250 μm, 250 μm-300 μm, 300 μm-350 μm, 350 μm-400 μm, or 400 μm-450 μm.

In some embodiments, the porous conductive material is made from an elemental metal or alloy containing element M, the element M being selected from copper, aluminum, or a combination thereof. For example, the porous conductive material is made from copper or copper alloy. The conductive film based on this solution has satisfactory strength. With such conductive film used in a secondary battery, the secondary battery shows improved capacity, cycling stability, and/or rate performance.

In some embodiments, the porous conductive material is prepared and obtained by dealloying.

In some embodiments, the porous conductive material is permeable to gas and/or liquid.

In some embodiments, the substrate has a tensile strength of 330 N/m$^2$ or above. The conductive film based on this solution has satisfactory strength. With such conductive film used in a secondary battery, the secondary battery shows improved capacity, cycling stability, and/or rate performance.

In some embodiments, the conductive film has a tensile strength of 100 N/mm$^2$ or above. The conductive film based on this solution has satisfactory strength. With such conductive film used in a secondary battery, the secondary battery shows improved capacity, cycling stability, and/or rate performance.

In some embodiments, the substrate has, for example, a tensile strength of 330 N/mm$^2$-500 N/mm$^2$, a tensile strength of 330 N/mm$^2$-400 N/mm$^2$, a tensile strength of 400 N/mm$^2$-450 N/mm$^2$, or a tensile strength of 450 N/mm$^2$-500 N/mm$^2$.

In some embodiments, the conductive film has, for example, a tensile strength of 330 N/mm$^2$-500 N/mm$^2$, a tensile strength of 330 N/mm$^2$-400 N/mm$^2$, a tensile strength of 400 N/mm$^2$-450 N/mm$^2$, or a tensile strength of 450 N/mm$^2$-500 N/mm$^2$.

According to a second aspect, this application provides a preparation method of conductive film, where the conductive film is defined according to any one of the foregoing embodiments, and the preparation method includes:

(1) providing a first raw material multi-layer body, the first raw material multi-layer body including:

a raw material substrate, where the raw material substrate has a first surface and a second surface facing away from each other, and the raw material substrate has a dense structure;
a first A alloy layer, where the first A alloy layer is stacked and bonded to the first surface of the raw material substrate, the first A alloy layer is made from a multi-phase alloy, and the multi-phase alloy contains αMn phase and (M, γMn) phase, the element M being selected from copper, aluminum, or a combination thereof; and
optionally, a first B alloy layer, where the first B alloy layer is stacked and bonded to the second surface of the raw material substrate, the first B alloy layer is made from a multi-phase alloy, and the multi-phase alloy contains αMn phase and (M, γMn) phase, the element M being selected from copper, aluminum, or a combination thereof; and

(2) removing at least a portion of the element Mn from the αMn phase of the multi-phase alloy and at least a portion of the element Mn from the (M, γMn) phase of the multi-phase alloy by dealloying;
where the raw material substrate is configured to remain intact during the dealloying treatment.

In some embodiments, the raw material substrate does not undergo a dealloying reaction during the dealloying treatment. The substrate may be made from a relatively inert metal, for example, a metal with a standard electrode potential greater than zero, such as Cu, Ni, Ag, Pt, Au, or an alloy thereof.

The foregoing method skillfully uses different chemical reactions of the $\alpha$Mn phase and the (M, $\gamma$Mn) phase in the multi-phase alloy during dealloying, where the $\alpha$Mn phase is removed during dealloying to form the pores with first pore size and the element Mn in the (M, $\gamma$Mn) phase is removed during dealloying to form the pores with second pore size, thereby obtaining the conductive film with the novel porous structure of this application. According to a Mn-Cu binary alloy phase diagram, a Mn-Cu binary alloy (with a percentage of Mn being 60at.%-90at.%) is an (M, $\gamma$Mn) single-phase structure within a temperature range of 700°C-865°C, while it is an $\alpha/\gamma$ dual-phase structure within a temperature range of 500°C-700°C. Therefore, the Mn-Cu alloy prepared by melting can be first annealed at high temperature (700°C-865°C) to obtain an (M, $\gamma$Mn) single-phase alloy with excellent plasticity processing capability, which is used to prepare precursor alloys of different shapes. Subsequently, an aging treatment at low temperature (500°C-700°C) is performed to form an $\alpha/\gamma$ dual-phase structure, which is used to prepare a final porous conductive material.

In some embodiments, $\alpha$Mn is an allotrope of manganese having a cbcc structure.

In some embodiments, the (M, $\gamma$Mn) phase is a solid solution phase formed by dissolving element M in $\gamma$Mn. For example, (Cu, $\gamma$Mn) phase is a solid solution phase formed by dissolving element Cu in $\gamma$Mn.

In some embodiments, a solid solution is a single-phase crystalline solid formed by dissolving one or more solute components in a crystalline solvent and maintaining a lattice type of the solvent.

In some embodiments, based on all element Mn in the $\alpha$Mn phase, at least 90at.% of the element Mn is removed from the $\alpha$Mn phase by dealloying. Based on this, the porous conductive material obtained has an innovative pore distribution characteristic.

In some embodiments, based on all element Mn in the (M, $\gamma$Mn) phase, at least 90at.% of the element Mn is removed from the (M, $\gamma$Mn) phase by dealloying. Based on this, the porous conductive material obtained has an innovative pore distribution characteristic.

In some embodiments, based on all element M in the multi-phase alloy, less than 10at.% of the element M is removed by dealloying. Based on this, the porous conductive material obtained has an innovative pore distribution characteristic.

In some embodiments, a percentage of the element Mn in the $\alpha$Mn phase is > 99at.%. Based on this, the porous conductive material obtained has an innovative pore distribution characteristic.

In some embodiments, a percentage of the element Mn in the (M, $\gamma$Mn) phase is 40at.%-80at.%. Based on this, the porous conductive material obtained has an innovative pore distribution characteristic.

In some embodiments, the (M, $\gamma$Mn) phase is a solid solution. Based on this, the porous conductive material obtained has an innovative pore distribution characteristic.

In some embodiments, a percentage of the $\alpha$Mn phase in the multi-phase alloy is 22vol%-70vol%. Based on this, the porous conductive material obtained has an innovative pore distribution characteristic. In some embodiments, in the multi-phase alloy, a percentage of the $\alpha$Mn phase is 22vol% 70vol%, for example, 22vol%-30vol%, 30vol%40vol%, 40vol%-50vol%, 50vol%-60vol%, or 60vol% 70vol%, and a percentage of the (M, $\gamma$Mn) phase is 30vol%-78vol%, for example, 30vol%40vol%, 40vol%S0vol%, 50vol%-60vol%, or 60vo1%78vo1%.

In some embodiments, a percentage of the (M, $\gamma$Mn) phase in the multi-phase alloy is 30vol% 78vol%. Based on this, the porous conductive material obtained has an innovative pore distribution characteristic.

In some embodiments, the $\alpha$Mn phase and the (M, $\gamma$Mn) phase are uniformly dispersed in the multi-phase alloy. Based on this, the porous conductive material obtained has an innovative pore distribution characteristic.

In some embodiments, the multi-phase alloy contains element Mn and element M, where a percentage of the element Mn is 60at.0/0-90at.%, and a percentage of the element M is 10at.%40at.%, the element M being selected from copper, aluminum, or a combination thereof. Based on this, the porous conductive material obtained has an innovative pore distribution characteristic.

In some embodiments, during the dealloying process, based mainly on differences in standard electrochemical potentials of precursor components, relatively reactive elements are selectively removed from the system, while remaining metal atoms are bonded to each other to obtain a porous conductive material.

In some embodiments, the method of dealloying is selected from chemical corrosion, electrochemical corrosion, or a combination thereof. Based on this, the porous conductive material obtained has an innovative pore distribution characteristic.

In some embodiments, the preparation method of conductive film in this application further includes a step of preparing the first raw material multi-layer body. The step specifically includes:

(1) providing a second raw material multi-layer body, the second raw material multi-layer body including:

a raw material substrate, where the raw material substrate has a first surface and a second surface facing away from each other, and the raw material substrate has a dense structure;
a second A alloy layer, where the second A alloy layer is stacked and bonded to the first surface of the raw material substrate, and a percentage of (M, γMn) phase in the second A alloy layer is 95vol% or above; and optionally, a second B alloy layer, where the second B alloy layer is stacked and bonded to the first surface of the raw material substrate, and a percentage of (M, γMn) phase in the second B alloy layer is 95vol% or above; and

(2) performing phase-separation heat treatment on the product of the previous step to form a multi-phase alloy in the second A alloy layer and/or the second B alloy layer, the multi-phase alloy containing αMn phase and (M, γMn) phase, to obtain the first raw material multi-layer body.

The second A alloy layer/second B alloy layer containing the (M, γMn) phase has excellent room-temperature plasticity. The first product is processed by plastic processing such as forging, rolling, and drawing, so that processed products of different shapes and sizes can be obtained. The processed products can maintain stable shapes and sizes during subsequent heat treatment and dealloying.

In some embodiments, the second raw material multi-layer body is prepared and obtained by stack rolling such as stack hot rolling. In an embodiment, an (M, γMn) phase alloy foil and a copper foil can be stacked in a required order, followed by hot rolling to obtain the second raw material multi-layer body.

In some embodiments, temperature of the phase-separation heat treatment is 500°C-700°C.

In some embodiments, time of the phase-separation heat treatment is 1 hour-4 hours.

In some embodiments, cooling is performed at a cooling speed of 20°C/s-1000°C/s after the phase-separation heat treatment.

In some embodiments, the second A alloy layer and/or second A alloy layer is made from a copper-manganese alloy, where a percentage of the element Mn is 600/0-90%.

In some embodiments, the y single-phase alloy having the (M, γMn) phase with a percentage of 95vol% or above can be obtained by performing first heat treatment on the copper-manganese alloy.

In some embodiments, temperature of the first heat treatment is 700°C-865°C. Based on this, the porous conductive material obtained has an innovative pore distribution characteristic.

In some embodiments, time of the first heat treatment is 0.16 hour or above, for example, 1 hour-2 hours. Based on this, the porous conductive material obtained has an innovative pore distribution characteristic.

In some embodiments, cooling, for example, water cooling, is performed at a cooling speed of 20°C/s-1000°C/s after the first heat treatment. Based on this, the porous conductive material obtained has an innovative pore distribution characteristic.

In some embodiments, the method further includes the operation of performing plastic processing on the first product before the phase-separation heat treatment.

In some embodiments, the phase-separation heat treatment is configured to convert a portion of the (M, γMn) phase into the αMn phase.

In some embodiments, the raw material substrate has a tensile strength of 330 N/mm$^2$ or above (for example, the substrate has a tensile strength of 330 N/mm$^2$-500 N/mm$^2$, a tensile strength of 330 N/mm$^2$-400 N/mm$^2$, or a tensile strength of 400 N/mm$^2$-500 N/mm$^2$).

According to a second aspect, this application provides a current collector including the porous conductive material according to any one of the foregoing embodiments.

According to a third aspect, this application provides a secondary battery including the current collector according to any one of the foregoing embodiments; where

in some embodiments, the secondary battery is an anode-free metal battery; and
in some embodiments, negative electrode active material of the secondary battery contains a metal or an alloy.

According to a fourth aspect, this application provides an apparatus including the secondary battery according to any one of the foregoing embodiments, where the secondary battery supplies electric energy to the apparatus.

[Secondary battery]

The secondary battery, also referred to as a rechargeable battery or a storage battery, is a battery that can be charged after being discharged to activate active materials for continuous use.

Generally, the secondary battery includes a positive electrode plate, a negative electrode plate, a separator, and an electrolyte. During charging and discharging of the battery, active ions (for example, lithium ions) are intercalated and deintercalated between the positive electrode plate and the negative electrode plate. The separator is disposed between the positive electrode plate and the negative electrode plate to mainly prevent short circuit between positive and negative electrodes and to allow the active ions to pass through. The electrolyte is between the positive electrode plate and the negative electrode plate to mainly conduct the active ions.

[Positive electrode plate]

The positive electrode plate typically includes a positive electrode current collector and a positive electrode film layer disposed on at least one surface of the positive electrode current collector, where the positive electrode film layer includes a positive electrode active material. A surface treatment composite may be provided between the positive electrode current collector and the positive electrode film layer.

For example, the positive electrode current collector includes two opposite surfaces in its thickness direction, and the positive electrode film layer is disposed on either or both of the two opposite surfaces of the positive electrode current collector.

In some embodiments, the positive electrode current collector may include the porous conductive material according to any one of the foregoing embodiments of this application. The positive electrode current collector may alternatively be a composite current collector, which may be formed by, for example, combining the porous conductive material according to any one of the foregoing embodiments with a polymer material matrix (for example, matrices of polypropylene (PP), polyethylene terephthalate (PET), polybutylene terephthalate (PBT), polystyrene (PS), and polyethylene (PE)).

In some embodiments, the positive electrode active material may be a positive electrode active material for batteries well known in the art. For example, the positive electrode active material may include at least one of the following materials: olivine-structured lithium-containing phosphate, lithium transition metal oxide, and respective modified compounds thereof. However, this application is not limited to these materials, but may use other conventional materials that can be used as positive electrode active materials for batteries instead. One of these positive electrode active materials may be used alone, or two or more of them may be used in combination. Examples of the lithium transition metal oxide may include but are not limited to at least one of lithium cobalt oxide (for example, $LiCoO_2$), lithium nickel oxide (for example, $LiNiO_2$), lithium manganese oxide (for example, $LiMnO_2$ and $LiMn_2O_4$), lithium nickel cobalt oxide, lithium manganese cobalt oxide, lithium nickel manganese oxide, lithium nickel cobalt manganese oxide (for example, $LiNi_{1/3}Co_{1/3}Mn_{1/3}O_2$ (NCM333 for short), $LiNi_{0.5}Co_{0.2}Mn_{0.3}O_2$ (NCM523 for short), $LiNi_{0.5}Co_{0.25}Mn_{0.25}O_2$ (NCM211 for short), $LiNi_{0.6}Co_{0.2}Mn_{0.2}O_2$ (NCM622 for short), and $LiNi_{0.8}Co_{0.1}Mn_{0.1}O_2$ (NCM811 for short), lithium nickel cobalt aluminum oxide (for example, $LiNi_{0.85}Co_{0.15}Al_{0.05}O_2$), and modified compounds thereof. Examples of the olivine-structured lithium-containing phosphate may include but are not limited to at least one of lithium iron phosphate (for example, $LiFePO_4$ (LFP for short)), a composite material of lithium iron phosphate and carbon, lithium manganese phosphate (for example, $LiMnPO_4$), a composite material of lithium manganese phosphate and carbon, lithium manganese iron phosphate, and a composite material of lithium manganese iron phosphate and carbon.

In some embodiments, the positive electrode film layer further optionally includes surface treatment. For example, the surface treatment may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofiber.

In some embodiments, the positive electrode plate may be prepared in the following manner: the foregoing constituents used for preparing the positive electrode plate, for example, the positive electrode active material, the conductive agent, the surface treatment, and any other constituent, are dispersed in a solvent (for example, N-methylpyrrolidone) to form a positive electrode slurry; and the positive electrode slurry is applied onto the positive electrode current collector, followed by processes such as drying and cold pressing, to obtain the positive electrode plate.

[Negative electrode current collector and negative electrode plate]

The conductive film of this application can be directly used as a negative electrode current collector (or electrode) of an anode-free (anode free) metal battery (for example, an anode-free lithium metal battery or an anode-free sodium metal battery).

In a lithium-free negative electrode battery, all active lithium ions are initially stored in a positive electrode material, and during initial charging, the lithium ions are extracted from a positive electrode, migrate to a negative electrode, and are directly electroplated on a bare negative electrode current collector in situ to form a lithium metal negative electrode. Subsequently, during discharging, the active lithium ions are stripped from the lithium metal negative electrode formed in situ and intercalated into the positive electrode. The lithium-free negative electrode battery has small size and high energy density.

The porous conductive material of this application can also be used as a negative electrode current collector of a battery containing an active metal/alloy negative electrode.

In some embodiments, the active metal/alloy is, for example, a lithium metal or a lithium alloy.

In some embodiments, in the negative electrode plate of the lithium metal battery, the porous conductive material of this application is used as the negative electrode current collector, where a lithium metal layer is deposited on an outer surface and/or inside the pores of the porous conductive material.

The term "lithium alloy" used herein is intended to represent a substance capable of forming an alloy with lithium by charging and capable of reversibly adsorbing and releasing lithium. Examples of the substance capable of forming an alloy with lithium include metal elements such as tin (Sn), silicon (Si), zinc (Zn), aluminum (Al), magnesium (Mg), indium (In), cadmium (Cd), lead (Pb), bismuth (Bi), and antimony (Sb), compounds thereof, and alloys thereof (including alloys of lithium with these metal elements). One or two or more of these substances may be suitably used through appropriate selection.

In some embodiments, other active metals/alloys than the lithium metal or lithium alloy include metal elements such as tin (Sn), silicon (Si), zinc (Zn), aluminum (Al), magnesium (Mg), indium (In), cadmium (Cd), lead (Pb), bismuth (Bi), and antimony (Sb), compounds thereof, and alloys thereof (including alloys of lithium with these metal elements).

In some embodiments, the active metal/alloy may be deposited on the surface and inside the pores of the porous conductive material by electrodeposition, vapor deposition (for example, physical/chemical vapor deposition), magnetron sputtering, or the like to obtain the negative electrode of the battery.

[Electrolyte]

The electrolyte conducts ions between the positive electrode plate and the negative electrode plate. The electrolyte is not specifically limited to any particular type in this application, and may be selected based on needs. For example, the electrolyte may be in a liquid state, a gel state, or an all-solid state.

In some embodiments, the electrolyte is liquid and includes an electrolytic salt and a solvent.

In some embodiments, the electrolytic salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, and diethyl sulfone.

In some embodiments, the electrolyte further optionally includes an additive. For example, the additive may include a negative electrode film-forming additive or a positive electrode film-forming additive, or may include an additive capable of improving some performance of the battery, for example, an additive for improving overcharge performance of the battery, or an additive for improving high-temperature or low-temperature performance of the battery.

[Separator]

In some embodiments, the secondary battery further includes a separator. The separator is not limited to any particular type in this application, and may be any well-known porous separator with good chemical stability and mechanical stability.

In some embodiments, material of the separator may be selected from at least one of glass fiber, non-woven fabric, polyethylene, polypropylene, and polyvinylidene fluoride. The separator may be a single-layer film or a multi-layer composite film, which is not particularly limited. When the separator is a multi-layer composite film, all layers may be made of the same or different materials, which is not particularly limited.

In some embodiments, the positive electrode plate, the negative electrode plate, and the separator may be made into an electrode assembly through winding or lamination.

In some embodiments, the secondary battery may include an outer package. The outer package may be used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. Material of the soft pack may be plastic. Polypropylene, polybutylene terephthalate, polybutylene succinate, and the like may be listed as the plastic.

The secondary battery is not limited to any particular shape in this application, and may be cylindrical, rectangular, or of any other shapes. For example, FIG. 9 is an overall diagram and exploded view of a rectangular secondary battery 5 as an example.

In some embodiments, referring to FIG. 9, the outer package may include a housing 51 and a cover plate 53. The housing 51 may include a base plate and a side plate connected onto the base plate, and the base plate and the side plate enclose an accommodating cavity. The housing 51 has an opening communicating with the accommodating cavity, and the cover plate 53 can cover the opening to seal the accommodating cavity. The positive electrode plate, the negative electrode plate, and the separator may be made into an electrode assembly 52 through winding or lamination. The electrode assembly 52 is packaged in the accommodating cavity. The electrolyte infiltrates into the electrode assembly 52. The secondary battery 5 may include one or more electrode assemblies 52, and persons skilled in the art may make choices according to actual requirements.

In some embodiments, the secondary battery may be assembled into a battery module, and the battery module may include one or more secondary batteries. The specific quantity may be chosen by persons skilled in the art according to use and capacity of the battery module.

FIG. 10 shows a battery module 4 as an example. Referring to FIG. 10, in the battery module 4, a plurality of secondary batteries 5 may be sequentially arranged in a length direction of the battery module 4. Certainly, the batteries may alternatively be arranged in any other manners. Further, the plurality of secondary batteries 5 may be fixed by fasteners.

Optionally, the battery module 4 may further include a shell with an accommodating space, and the plurality of secondary batteries 5 are accommodated in the accommodating space.

In some embodiments, the battery module may be further assembled into a battery pack, and the battery pack may include one or more battery modules. The specific quantity may be chosen by persons skilled in the art according to use and capacity of the battery pack.

FIG. 11 and FIG. 12 show a battery pack 1 as an example. Referring to FIG. 11 and FIG. 12, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery modules 4. The plurality of battery modules 4 may be arranged in the battery box in any manner.

In addition, this application further provides an apparatus. The apparatus includes at least one of the secondary battery, the battery module, or the battery pack provided in this application. The secondary battery, the battery module, or the battery pack may be used as a power source of the apparatus or an energy storage unit of the apparatus. The apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The secondary battery, the battery module, or the battery pack may be selected for the apparatus based on requirements for using the apparatus.

FIG. 13 shows an apparatus as an example. The apparatus is a battery electric vehicle, a hybrid electric vehicle, a plug-in hybrid electric vehicle, or the like. To satisfy requirements of the apparatus for high power and high energy density of the secondary battery, a battery pack or a battery module may be used.

Example 1

(1) Preparation of second raw material multi-layer body

Copper metal (with a purity > 99%) and manganese metal (with a purity > 99%) were provided and melted into an alloy ingot using a vacuum induction melting furnace, where composition of the alloy ingot in this example was $Mn_{60}Cu_{40}$ (the subscripts represented an atomic ratio).

The alloy ingot was forged at a forging pressure of 20 T, and subjected to a stress-relief annealing operation after each forging, with an annealing temperature of 800°C and an annealing time of 60 min. After annealing, water cooling was performed.

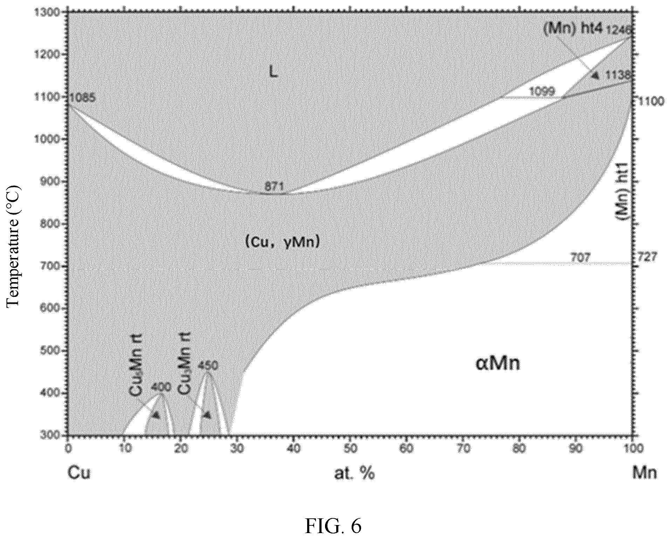

The forged alloy ingot was subjected to first heat treatment, with a temperature of 800°C and a time of 60 min. Referring to the Mn-Cu phase diagram shown in FIG. 6, it can be learned that the product after the first heat treatment was a single-phase alloy composed of (Cu, $\gamma$Mn) phase (referred to as y single-phase alloy).

The y single-phase alloy was subjected to initial hot rolling to obtain an alloy foil material. The alloy foil material and red copper foil raw material (with a tensile strength of 370 N/mm$^2$) were stacked in a stacking manner of "alloy foil material/red copper foil/alloy foil material", and then rolled for a plurality of times until the product reached a target thickness, to obtain the second raw material multi-layer body.

The second raw material multi-layer body includes a raw material substrate, a second A alloy layer, and a second B alloy layer. The raw material substrate has a first surface and a second surface facing away from each other, and the raw material substrate has a tensile strength of 370 N/mm$^2$; the second A alloy layer is stacked and bonded to the first surface of the raw material substrate; and the second A alloy layer is made from (Cu, $\gamma$Mn), and the second B alloy layer is made from (Cu, $\gamma$Mn).

(2) Preparation of first raw material multi-layer body

The second raw material multi-layer body was subjected to phase-separation heat treatment, with a phase-separation heat treatment temperature of 650°C and a heat treatment time of 4 h, to obtain the first raw material multi-layer body. Referring to the Mn-Cu phase diagram shown in FIG. 6, it can be learned that after the phase-separation heat treatment, the second A alloy layer was transformed into a first A alloy layer with its material being transformed into a multi-phase alloy containing $\alpha$Mn phase and (Cu, $\gamma$Mn) phase, and the second B alloy layer was transformed into the first B alloy layer with its material being transformed into a multi-phase alloy containing $\alpha$Mn phase and (Cu, $\gamma$Mn) phase.

The first raw material multi-layer body includes a raw material substrate, a first alloy layer, and a second alloy layer. The raw material substrate has a first surface and a second surface facing away from each other, and the raw material substrate has a dense structure and a tensile strength of 370 N/mm$^2$. The first alloy layer is stacked and bonded to the first surface of the raw material substrate, and the first alloy layer is made from a multi-phase alloy containing $\alpha$Mn phase and (Cu, $\gamma$Mn) phase. The second alloy layer is stacked and bonded to the second surface of the raw material substrate, and the second alloy layer is made from a multi-phase alloy containing $\alpha$Mn phase and (Cu, $\gamma$Mn) phase.

(3) Dealloying

The first raw material multi-layer body was placed in a sufficient 2.38 mol/L HCl aqueous solution for dealloying through free corrosion at 25°C. When no obvious bubbles escaped, dealloying was completed, and the conductive film in Example 1 was obtained.

For the raw material substrate, its structure and properties during dealloying basically did not change, and its composition and tensile strength after dealloying were consistent with those of the red copper foil raw material. For the first alloy layer and the second alloy layer, the multi-phase alloy containing $\alpha$Mn phase and (Cu, $\gamma$Mn) phase can form a porous conductive material (which was porous copper herein) after the dealloying treatment. Referring to the schematic diagram of the porous conductive material in FIG. 1, the principle of dealloying is as follows.

(1) After the dealloying treatment, the $\alpha$Mn phase in the multi-phase alloy is removed, and the pores 601 with first pore size are formed at the positions where $\alpha$Mn is removed.

(2) After the dealloying treatment, a portion of the (Cu, $\gamma$Mn) phase in the multi-phase alloy is removed, a portion of the element Mn in the (Cu, $\gamma$Mn) phase is removed, and a portion of the element Cu is retained. The retained element Cu forms the first ligament 600, and the pores 602 with second pore size are formed at the positions where the element Mn is removed.

FIG. 2 is a schematic cross-sectional view and cross-sectional scanning electron microscope image of the conductive film in Example 1. The conductive film includes a substrate 100, a first porous layer 110, and a second porous layer 120. The substrate 100 has a first surface 101 and a second surface 102 facing away from each other, and the substrate 100 has a dense structure and a tensile strength of 330 N/mm$^2$ or above; the first porous layer 110 is stacked and bonded to the first surface 101 of the substrate 110; and the second porous layer 120 is stacked to the second surface 120 of the substrate. The first porous layer 110 and the second porous layer 120 are made from a porous conductive material (which is porous copper herein). Thickness of the substrate 100 is 6 $\mu$m, thickness of the first porous layer 110 is 120 $\mu$m, and thickness of the second porous layer 120 is 120 $\mu$m. The substrate 100 is made from dense red copper with tensile strength; and the first porous layer 110 and the second porous layer 120 are both made from porous copper.

FIG. 3 is a scanning electron microscope image of a surface of the first porous layer 101 in Example 1. As shown in the figure, the first porous layer 101 is made from a porous conductive material, and the porous conductive material has pores with first pore size (referred to as macropores) and pores with second pore size (referred to as small pores). 50-100 macropores and 50-100 small pores were selected from the scanning electron microscope image, pore sizes and ligament diameters of the macropores and small pores were measured respectively, and averages were calculated respectively. For detailed results, refer to Table 1.

Example 2

Example 2 differed from Example 1 in that the composition of the alloy ingot in step (1) was Mn$_{75}$Cu$_{25}$.

The preparation method of the conductive film in Example 2 was as follows.

(1) Preparation of second raw material multi-layer body

Copper metal (with a purity > 99%) and manganese metal (with a purity > 99%) were provided and melted into an alloy ingot using a vacuum induction melting furnace, where composition of the alloy ingot in this example was Mn$_{75}$Cu$_{25}$

(the subscripts represented an atomic ratio).

The alloy ingot was forged at a forging pressure of 20 T, and subjected to a stress-relief annealing operation after each forging, with an annealing temperature of 800°C and an annealing time of 60 min. After annealing, water cooling was performed. The forged alloy ingot was subjected to first heat treatment, with a temperature of 800°C and a time of 60 min, to obtain a single-phase alloy composed of $(Cu, \gamma Mn)$ phase (referred to as y single-phase alloy).

The $\gamma$ single-phase alloy was subjected to initial hot rolling to obtain an alloy foil material. The alloy foil material and red copper foil raw material were stacked in a stacking manner of "alloy foil material/red copper foil/alloy foil material", and then rolled for a plurality of times until the product reached a target thickness, to obtain the second raw material multi-layer body.

The second raw material multi-layer body includes a raw material substrate, a second A alloy layer, and a second B alloy layer. The raw material substrate has a first surface and a second surface facing away from each other, and the raw material substrate has a dense structure and a tensile strength of 359 N/mm$^2$; the second A alloy layer is stacked and bonded to the first surface of the raw material substrate; and the second A alloy layer is made from $(Cu, \gamma Mn)$, and the second B alloy layer is made from $(Cu, \gamma Mn)$. The XRD pattern of the second A alloy layer is shown in (a) of FIG. 7, and diffraction peaks of the $(Cu, \gamma Mn)$ phase can be observed in the figure.

(2) Preparation of first raw material multi-layer body

The second raw material multi-layer body was subjected to phase-separation heat treatment, with a phase-separation heat treatment temperature of 650°C and a heat treatment time of 4 h, to obtain the first raw material multi-layer body.

The first raw material multi-layer body includes a raw material substrate, a first A alloy layer, and a first B alloy layer. The raw material substrate has a first surface and a first surface facing away from each other, and the raw material substrate has a tensile strength of 359 N/mm$^2$; the first A alloy layer is stacked and bonded to the first surface of the raw material substrate; and the first A alloy layer is made from a multi-phase alloy, and the first B alloy layer is made from a multi-phase alloy. The XRD pattern of the first A alloy layer is shown in (b) of FIG. 7, and diffraction peaks of the $\alpha Mn$ phase and diffraction peaks of the $(Cu, \gamma Mn)$ phase can be observed in the figure.

(3) Dealloying

The first raw material multi-layer body was placed in a sufficient 2.38 mol/L HCl aqueous solution for dealloying through free corrosion at 25°C. When no obvious bubbles escaped, dealloying was completed, and the conductive film in Example 2 was obtained.

The conductive film in Example 2 includes a substrate 100, a first porous layer 110, and a second porous layer 120. The substrate 100 has a first surface 101 and a second surface 102 facing away from each other, and the substrate 100 has a tensile strength of 359 N/mm$^2$; the first porous layer 110 is stacked and bonded to the first surface 101 of the substrate 110; and the second porous layer 120 is stacked to the second surface 120 of the substrate. The first porous layer 110 and the second porous layer 120 are made from a porous conductive material (which is porous copper herein). Thickness of the substrate 100 is 6 $\mu$m, thickness of the first porous layer 110 is 120 $\mu$m, and thickness of the second porous layer 120 is 120 $\mu$m. The substrate 100 is made from dense red copper; and the first porous layer 110 and the second porous layer 120 are both made from porous copper.

FIG. 4 is a scanning electron microscope image of a surface of the first porous layer 101 in Example 2. As shown in the figure, the first porous layer 101 is made from a porous conductive material, and the porous conductive material has pores with first pore size (referred to as macropores) and pores with second pore size (referred to as small pores). 50-100 macropores and 50-100 small pores were selected from the scanning electron microscope image, pore sizes and ligament diameters of the macropores and small pores were measured respectively, and averages were calculated respectively. For detailed results, refer to Table 1.

The XRD pattern of the first porous layer is shown in (c) of FIG. 7, and diffraction peaks of the Cu phase can be observed in the figure.

Example 3

Example 3 differed from Example 1 in that the composition of the alloy ingot in step (1) was $Mn_{90}Cu_{10}$.

The preparation method of the conductive film in Example 3 was as follows.

(1) Preparation of second raw material multi-layer body

Copper metal (with a purity > 99%) and manganese metal (with a purity > 99%) were provided and melted into an alloy ingot using a vacuum induction melting furnace, where composition of the alloy ingot in this example was $Mn_{90}Cu_{10}$ (the subscripts represented an atomic ratio).

The alloy ingot was forged at a forging pressure of 20 T, and subjected to a stress-relief annealing operation after each forging, with an annealing temperature of 800°C and an annealing time of 60 min. After annealing, water cooling was performed. The forged alloy ingot was subjected to first heat treatment, with a temperature of 800°C and a time of 60 min, to obtain a single-phase alloy composed of (Cu, $\gamma$Mn) phase (referred to as y single-phase alloy).

The y single-phase alloy was subjected to initial hot rolling to obtain an alloy foil material. The alloy foil material and red copper foil raw material were stacked in a stacking manner of "alloy foil material/red copper foil/alloy foil material", and then rolled for a plurality of times until the product reached a target thickness, to obtain the second raw material multi-layer body.

(2) Preparation of first raw material multi-layer body

The second raw material multi-layer body was subjected to phase-separation heat treatment, with a phase-separation heat treatment temperature of 650°C and a heat treatment time of 4 h, to obtain the first raw material multi-layer body.

The first raw material multi-layer body includes a raw material substrate, a first A alloy layer, and a first B alloy layer. The raw material substrate has a first surface and a first surface facing away from each other, and the raw material substrate has a dense structure and a tensile strength of 360 N/mm$^2$; the first A alloy layer is stacked and bonded to the first surface of the raw material substrate; and the first A alloy layer is made from a multi-phase alloy, and the first B alloy layer is made from a multi-phase alloy.

(3) Dealloying

The first raw material multi-layer body was placed in a sufficient 2.38 mol/L HCl aqueous solution for dealloying through free corrosion at 25°C. When no obvious bubbles escaped, dealloying was completed, and the conductive film in Example 2 was obtained.

The conductive film in Example 2 includes a substrate 100, a first porous layer 110, and a second porous layer 120. The substrate 100 has a first surface 101 and a second surface 102 facing away from each other, and the substrate 100 has a tensile strength of 360 N/mm$^2$; the first porous layer 110 is stacked and bonded to the first surface 101 of the substrate 110; and the second porous layer 120 is stacked to the second surface 120 of the substrate. The first porous layer 110 and the second porous layer 120 are made from a porous conductive material (which is porous copper herein). Thickness of the substrate 100 is 6 $\mu$m, thickness of the first porous layer 110 is 120 $\mu$m, and thickness of the second porous layer 120 is 120 $\mu$m. The substrate 100 is made from dense red copper; and the first porous layer 110 and the second porous layer 120 are both made from porous copper.

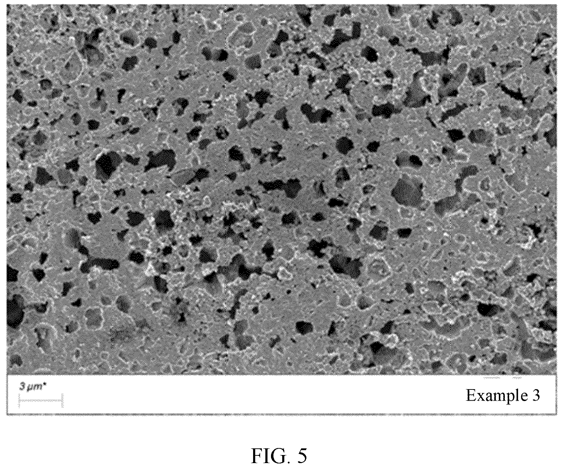

FIG. 5 is a scanning electron microscope image of a surface of the first porous layer 101 in Example 3. As shown in the figure, the first porous layer 101 is made from a porous conductive material, and the porous conductive material has pores with first pore size (referred to as macropores) and pores with second pore size (referred to as small pores). 50-100 macropores and 50-100 small pores were selected from the scanning electron microscope image, pore sizes and ligament diameters of the macropores and small pores were measured respectively, and averages were calculated respectively. For the results, refer to Table 1.

Examples 4 to 9

Examples 4 to 9 differed from Example 2 in one or more of the following:

 (1) the thicknesses of the first porous layer and the second porous layer were different from those in Example 2; and
 (2) the thickness of the substrate was different from that in Example 2.

Parameters of the conductive films in Examples 4 to 9 are shown in Table 1 below.

Examples 10 to 12

Examples 10 to 12 differed from Example 2 in that the pore size of the macropores of the porous conductive material was different from that in Example 2. For details, refer to Table 1.

The pore size of the macropores was specifically changed by adjusting the dealloying time during dealloying.

In Example 10, the dealloying corrosion solution was 2.2 mol/L HCl aqueous solution, the dealloying temperature was 25°C, and the dealloying time was 6 h.

In Example 11, the dealloying corrosion solution was 2.38 mol/L HCl aqueous solution, the dealloying temperature was 25°C, and the dealloying time was 36 h.

In Example 12, the dealloying corrosion solution was 2.38 mol/L HCl aqueous solution, the dealloying temperature was 25°C, and the dealloying time was 60 h.

Examples 13 to 15

Examples 13 to 15 differed from Example 2 in that the pore size of the small pores of the porous conductive material was different from that in Example 2. For details, refer to Table 1.

The pore size of the small pores was specifically changed by adjusting the parameters of dealloying.

In Example 13, the dealloying temperature was 25°C.

In Example 14, the dealloying temperature was 35°C.

In Example 15, the dealloying temperature was 40°C.

Comparative Example 1

The conductive film in Comparative Example 1 was composed of a 200 $\mu$m thick single porous layer. The preparation method thereof was as follows.

(1) 200 $\mu$m thick $Mn_{75}Cu_{25}$ foil material was provided, and its composition was a single-phase alloy of (Cu, $\gamma$Mn) phase (referred to as y single-phase alloy).

(2) The foregoing $Mn_{75}Cu_{25}$ foil material was subjected to phase-separation heat treatment, with a heat treatment temperature of 650°C and a heat treatment time of 4 h, to obtain an $\alpha/\gamma$ dual-phase alloy product.

(3) The product of the previous step was placed in a sufficient 2.38 mol/L HCl aqueous solution for dealloying through free corrosion at 25°C. When no obvious bubbles escaped from the solution, the dealloyed foil material was taken out to obtain the conductive film in Comparative Example 1.

Comparative Example 2

The conductive film in Comparative Example 2 was a commercially available single-layer copper foam with a thickness of 120 $\mu$m, a porosity of 80%, an average pore size of 400 $\mu$m, and a pore size distribution range of 300 $\mu$m-500 $\mu$m.

Structure and performance analysis

1. Pore volume

According to the original composition of the alloy ingot and the heat treatment process and with reference to the Cu-Mn alloy phase diagram shown in FIG. 6, the percentage ($V_1$/V) of the total pore volume of the macropores in the porous copper to the apparent volume of the porous copper, the percentage ($V_2$/V) of the total pore volume of the small pores in the porous copper to the apparent volume of the porous copper, and the percentage (($V_1 + V_2$)/V) of the total pore volume of the macropores and small pores to the apparent volume of the porous copper can be reasonably derived based on the following formulas. For detailed results, refer to Table 1.

Considering that the Mn-Cu alloy was fully dealloyed during dealloying, it can be reasonably deduced that the element manganese in the Mn-Cu alloy was completely removed. After the element manganese was all removed from the $\alpha$Mn phase of the Mn-Cu multi-phase alloy, the $\alpha$Mn phase disappeared, and the pore (referred to as macroporous) structure with first pore size was correspondingly formed at the position of the $\alpha$Mn phase. After the element manganese was removed from the (Cu, $\gamma$Mn) phase of the Mn-Cu multi-phase alloy, the manganese metal in the (Cu, $\gamma$Mn) phase disappeared, while the copper metal was retained, and the pore (referred to as small porous) structure with second pore size was correspondingly formed on the (Cu, $\gamma$Mn) phase. The foregoing macroporous structure and small porous structure jointly formed the multi-level porous structure of the porous copper.

With the apparent volume of the porous copper denoted as V, the pore volume percentage of the macropores ($V_1$/V) and the pore volume percentage of the small pores ($V_2$/V) can be calculated according to the following formula:

$$V_1/V = \frac{[1 - (1-x)/(1-x_\gamma)] * 1.045}{1 - x + x * 1.045}$$

$$V_2/V = \frac{x_\gamma * 1.045}{1 - x_\gamma + x_\gamma * 1.045} * (1 - V1)$$

$x$ was the percentage (at.%) of Mn in the alloy precursor;
$x_\gamma$ was the percentage (at.%) of Mn in the (Cu, $\gamma$Mn)phase; and
1.045 was the atomic volume ratio of Mn:Cu.

The pore volumes of the macropores and small pores of the porous copper in the foregoing examples are shown in Table 1.

2. Specific surface area of pores

In addition, the total specific surface area of the porous copper was S (in $m^2/g$), where the total specific surface area of the macropores was $S_1$ and the total specific surface area of the small pores was $S_2$. The values of the total specific surface area of the macropores ($S_1$) and the total specific surface area ($S_2$) of the small pores were obtained in accordance with the calculation formulas and methods provided in the literature Celal Soyarslan, et al., Acta Materialia, (2018), 149, 326. respectively. Total specific surface area S = $S_1$+ $S_2$. The related results are shown in Table 3 below.
The calculation formula for the total specific surface area $S_1$ of the macropores was as follows:

$$S_1 = \frac{C_1}{\frac{L_1}{\Psi_1} * \rho_{Cu} * (1 - p) * V}$$

$C_1$ was the empirical constant, with values taken in accordance with Table 3;
$\Psi_1$ was the volume percentage $V_1/V$ of the macropores, with values taken in accordance with Table 1;
$L_1$ was the average diameter of the ligaments forming the macroporous structure;
$\rho_{Cu}$ was the density of the copper with a value of 8.9 $g/cm^3$;
p was the atomic percentage of the element manganese in the alloy; and
V was 1 $cm^3$.

The calculation formula for the total specific surface area $S_2$ of the small pores was as follows:

$$S_2 = \frac{C_2}{\frac{L_2}{\Psi_2} * \rho_{Cu} * (1 - p) * V}$$

$C_2$ was the empirical constant, with values taken in accordance with Table 1;
$\Psi_2$ was the volume percentage $V_2/V$ of the small pores, with values taken in accordance with Table 1;
$L_2$ was the average diameter of the ligaments forming the small porous structure;
$\rho_{Cu}$ was the density of the copper with a value of 8.9 $g/cm^3$;
p was the atomic percentage of the element manganese in the alloy; and
V was 1 $cm^3$.

The total specific surface areas of the macropores and small pores of the porous copper in the foregoing examples are shown in Table 1.

3. Pore size and ligament diameter

50-100 macropores and 50-100 small pores were selected from the scanning electron microscope image, pore sizes and ligament diameters of the macropores and small pores were measured respectively, and averages were calculated respectively. For the results, refer to Table 1.

4. Tensile strength

The tensile strengths of the conductive film and the raw material substrate can be obtained through testing in the following method.

An electronic universal testing machine of model CZ-8010 was used. The test method was as follows: a sample (a conductive film or raw material substrate under test) was cut into a size of 18 mm* 100 mm for later use; and during the test, two ends of the sample were clamped onto two clamping heads of the universal testing machine, with the speed set to 5 mm/min, for the tensile test. The calculation formula for the tensile strength was as follows:

$$\sigma = P_b/A_0$$

$P_b$ was the maximum force on the sample when it broke, in N (Newtons);
$A_0$ was the original cross-sectional area of the sample, in mm$^2$; and
$\sigma$ was the tensile strength, in N/mm$^2$.

The results are shown in Table 1.

5. Cycle test of secondary battery

(1) The conductive films in Example 2 and Comparative Example 2 were used as the electrodes (current collectors), and secondary batteries were assembled according to the following method respectively, where the secondary battery included a first electrode and a second electrode opposite each other.

For the first electrode, an aluminum foil was used as the current collector, and the surface of the current collector was coated with positive electrode active material lithium cobalt oxide (with $D_v50$ of 8.1 $\mu$m). The size of the first electrode was $\phi$16 mm, and the loading amount of the active material was 0.169 mg/mm$^2$;
The conductive film mentioned in this patent was used as the second electrode, with a size of $\phi$18 mm.
A polyethylene separator was used as the separator, with a size of $\phi$20 mm.
1 mol/L solution of lithium hexafluorophosphate dissolved in ethylene carbonate-dimethyl carbonate (at a volume ratio of 1:1) was used as the electrolyte.
A button cell housing of model CR2032 was used for completing the assembly of the secondary battery in a glove box.
(2) The battery test parameters were as follows:

(1) the charge and discharge cut-off voltage was 2.8 V-4.2 V; and
(2) the charge and discharge current was 1 mA/cm$^2$.

The capacity-cycles test results of the secondary batteries are shown in Table 2 below. FIG. 8 shows capacity-cycles curves of the secondary batteries.

## Table 1

| Examples | Total porosity $(V_1 + V_2)/V$ | Pores with first pore size (macropores) | | | | | Pores with second pore size (small pores) | | | | | First/second porous layer | Substrate | | Conductive film |
|---|---|---|---|---|---|---|---|---|---|---|---|---|---|---|---|
| | | Ligament diameter ($\mu$m) | Empirical constant $C_1$ | Specific surface area (m²/g) | Pore size ($\mu$m) | Porosity $V_1/V$ | Ligament diameter (nm) | Empirical constant $C_2$ | Specific surface area (m²/g) | Pore size (nm) | Porosity $V_2/V$ | Thickness ($\mu$m) | Thickness ($\mu$m) | Tensile strength (N/mm²) | Tensile strength (N/mm²) |
| Example 1 | 60 | 1.4 | 1.9934 | 0.08 | 3.9 | 0.204 | 62 | 2.7509 | 1.14 | 97 | 0.449 | 120 | 6 | 370 | 142 |
| Example 2 | 75 | 1.35 | 2.8406 | 0.48 | 4 | 0.505 | 59 | 2.4757 | 3.02 | 99 | 0.317 | 120 | 6 | 359 | 133 |
| Example 3 | 90 | 1.36 | 1.9934 | 1.32 | 3.78 | 0.803 | 56 | 1.2496 | 2.85 | 99 | 0.141 | 120 | 6 | 360 | 105 |
| Example 4 | 75 | 1.08 | 2.8406 | 0.60 | 4.2 | 0.505 | 46 | 1.2496 | 0.87 | 167 | 0.141 | 50 | 6 | 377 | 116 |
| Example 5 | | | | | | | | | | | | 125 | 6 | 330 | 131 |
| Example 6 | | | | | | | | | | | | 200 | 6 | 350 | 137 |
| Example 7 | | | | | | | | | | | | 120 | 4.5 | 330 | 102 |
| Example 8 | | | | | | | | | | | | 120 | 8.3 | 388 | 151 |
| Example 9 | | | | | | | | | | | | 120 | 12 | 400 | 180 |
| Example 10 | 75 | 1.79 | 2.8406 | 0.36 | 0.5 | 0.505 | 36 | 2.4757 | 4.96 | 189 | 0.317 | 120 | 6 | 350 | 130 |
| Example 11 | 75 | 1.75 | 2.8406 | 0.37 | 5.3 | 0.505 | 38 | 2.4757 | 4.70 | 190 | 0.317 | 120 | 6 | 367 | 127 |
| Example 12 | 75 | 1.75 | 2.8406 | 0.37 | 10 | 0.505 | 34 | 2.4757 | 5.25 | 189 | 0.317 | 120 | 6 | 355 | 122 |
| Example 13 | 75 | 1.75 | 2.8406 | 0.37 | 3.9 | 0.505 | 35 | 2.4757 | 5.10 | 20 | 0.317 | 120 | 6 | 360 | 131 |
| Example 14 | 75 | 1.75 | 2.8406 | 0.37 | 4.1 | 0.505 | 37 | 2.4757 | 4.82 | 110 | 0.317 | 120 | 6 | 367 | 126 |
| Example 15 | 75 | 1.75 | 2.8406 | 0.37 | 3.95 | 0.505 | 36 | 2.4757 | 4.96 | 200 | 0.317 | 120 | 6 | 349 | 122 |
| Comparative Example 1 | 75 | 1.75 | 2.8406 | 0.37 | 2.98 | 0.505 | 37 | 2.4757 | 4.82 | 49 | 0.317 | 200 | 0 | / | None |

*The conductive film in Comparative Example 1 is brittle and fragile and has excessively low strength, so valid tensile test data cannot be obtained.

*In the foregoing examples and comparative examples, the thicknesses and materials of the first porous layer and the second porous layer are exactly the same.

**Table 2**

| Cycles | Capacity in Example 2 (mAh) | Capacity in Comparative Example 2 (mAh) |
|---|---|---|
| 1 | 150 | 146 |
| 10 | 152 | 145 |
| 20 | 150 | 136 |
| 30 | 140 | 133.2 |
| 40 | 144 | 130.2 |
| 50 | 141 | 127.1 |
| 60 | 139 | 122.1 |
| 70 | 135 | 116.1 |
| 77 | 130 | 111.9 |

The conductive films in Examples 1 to 15 have the stacked structure composed of the bonded substrate and porous layer, and the conductive films show satisfactory tensile strength. The substrate with good tensile strength plays a role in supporting the porous layer and provides a stable substrate for the porous layer. The conductive film has improved overall mechanical performance, and therefore can play a role in the secondary battery, improving one or more performance of the secondary battery, such as capacity, cycling performance, and rate performance. The conductive film in Comparative Example 1 has a single-layer structure composed of only the porous layer, which is brittle and fragile and has excessively low strength, so valid data in the tensile test cannot be obtained.

The conductive films in Examples 1 to 15 are used as the electrodes or current collectors of the secondary batteries, and the action principle is as follows: having pores with first pore size and pores with second pore size. Inner walls of the pores with first pore size (referred to as macropores) can serve as a substrate for deposition of active substances. In addition, the macropores also serve to provide electrolyte infiltration channels. Inner walls of the pores with second pore size (referred to as small pores) can serve as a substrate for deposition of active substances. The small pores increase specific surface area of the material, so that the porous conductive material can accommodate more active substances. In addition, the small pores also serve as a template for deposition of active substances. Specifically, limited by the size of the small pores, the active substances deposited in the small pores are nanoscale, and the nanoscale active substances have high ionic conductivity due to the small size, which can improve overall ionic conductivity of the electrode, and in turn improve rate performance of the battery, ultimately improving the overall capacity, cycling stability, and rate performance of the battery. In addition, the small pores also serve to suppress volume swelling of the active material, avoiding pulverization and failure of the active material.

The conductive film in Comparative Example 2 has only a single pore size distribution, with a pore size distribution range of 300 $\mu$m-500 $\mu$m. As shown in Table 2, with the conductive films in Example 2 and Comparative Example 2 being used in the secondary batteries, the secondary battery in Example 2 shows increased specific capacity (150 mAh) and cycling retention rate (with 87% retained after 77 cycles). The secondary battery in Comparative Example 2 shows low specific capacity (146 mAh) and cycling retention rate (with 77% retained after 77 cycles).

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

**Claims**

1. A conductive film, wherein the conductive film comprises:

    a substrate, wherein the substrate has a first surface and a second surface facing away from each other, and the substrate has a dense structure; and
    a first porous layer, wherein the first porous layer is stacked and bonded to the first surface of the substrate;
    the first porous layer comprises a porous conductive material; and
    the porous conductive material has pores with first pore size and pores with second pore size,

the first pore size being n micrometers, wherein $0.5 \leq n \leq 10$; and

the second pore size being m nanometers, wherein $20 < m < 200$.

2. The conductive film according to claim 1, wherein the conductive film further comprises:

a second porous layer, wherein the second porous layer is stacked and bonded to the second surface of the substrate;

the first porous layer and the second porous layer each independently comprise a porous conductive material; and

the porous conductive material has pores with first pore size and pores with second pore size,

the first pore size being n micrometers, wherein $0.5 \leq n \leq 10$; and

the second pore size being m nanometers, wherein $20 < m < 200$.

3. The conductive film according to claim 1 or 2, wherein an apparent volume of the porous conductive material is V, a total pore volume of the pores with first pore size is $V_1$, a total pore volume of the pores with second pore size is $V_2$, and the porous conductive material satisfies the following relation:

$$(V_1 + V_2)/V = 60\%\text{–}90\%.$$

4. The conductive film according to any one of claims 1 to 3, wherein an apparent volume of the porous conductive material is V, a total pore volume of the pores with first pore size is $V_1$, and the porous conductive material satisfies the following relation:

$$V_1/V = 5\%\text{–}70\%.$$

5. The conductive film according to any one of claims 1 to 4, wherein an apparent volume of the porous conductive material is V, a total pore volume of the pores with second pore size is $V_2$, and the porous conductive material satisfies the following relation:

$$V_2/V = 15\%\text{–}70\%.$$

6. The conductive film according to any one of claims 1 to 5, wherein the conductive film has one or more of the following characteristics:

(1) adjacent pores with first pore size are separated by a first ligament, an average ligament diameter of the first ligament being $0.89\ \mu\text{m-}3\ \mu\text{m}$; and

(2) adjacent pores with second pore size are separated by a second ligament, an average ligament diameter of the second ligament being 27 nm-100 nm.

7. The conductive film according to any one of claims 1 to 5, wherein the conductive film has one or more of the following characteristics:

(1) total specific surface area of the pores with first pore size is $0.08\ \text{m}^2/\text{g-}1.32\ \text{m}^2/\text{g}$;

(2) total specific surface area of the pores with second pore size is $0.87\ \text{m}^2/\text{g-}5.25\ \text{m}^2/\text{g}$; and

(3) specific surface area of the porous conductive material is $0.95\ \text{m}^2/\text{g-}6.57\ \text{m}^2/\text{g}$.

8. The conductive film according to any one of claims 1 to 7, wherein the conductive film has one or more of the following characteristics:

(1) thickness of the substrate is $4.5\ \mu\text{m-}12\ \mu\text{m}$; and

(2) thickness of the first porous layer is $50\ \mu\text{m-}200\ \mu\text{m}$.

9. The conductive film according to any one of claims 2 to 8, wherein the conductive film has one or more of the following characteristics:

(1) thickness of the substrate is $4.5\ \mu\text{m-}12\ \mu\text{m}$;

(2) thickness of the first porous layer is 50 $\mu$m-200 $\mu$m; and
(3) thickness of the second porous layer is 50 $\mu$m-200 $\mu$m.

10. The conductive film according to any one of claims 1 to 9, wherein the porous conductive material is made from an elemental metal or alloy containing element M, the element M being selected from copper, aluminum, or a combination thereof.

11. The conductive film according to any one of claims 1 to 10, wherein the conductive film has one or more of the following characteristics:

   (1) the substrate has a tensile strength of 330 N/m$^2$ or above; and
   (2) the conductive film has a tensile strength of 100 N/m$^2$ or above.

12. A preparation method of conductive film, wherein the conductive film is defined according to any one of claims 1 to 11, and the preparation method comprises:

   (1) providing a first raw material multi-layer body, the first raw material multi-layer body comprising:

   a raw material substrate, wherein the raw material substrate has a first surface and a second surface facing away from each other, and the raw material substrate has a dense structure;
   a first A alloy layer, wherein the first A alloy layer is stacked and bonded to the first surface of the raw material substrate, the first A alloy layer is made from a multi-phase alloy, and the multi-phase alloy contains $\alpha$Mn phase and (M, $\gamma$Mn) phase, the element M being selected from copper, aluminum, or a combination thereof; and
   optionally, a first B alloy layer, wherein the first B alloy layer is stacked and bonded to the second surface of the raw material substrate, the first B alloy layer is made from a multi-phase alloy, and the multi-phase alloy contains $\alpha$Mn phase and (M, $\gamma$Mn) phase, the element M being selected from copper, aluminum, or a combination thereof; and

   (2) removing at least a portion of the element Mn from the $\alpha$Mn phase of the multi-phase alloy and at least a portion of the element Mn from the (M, $\gamma$Mn) phase of the multi-phase alloy by dealloying;
   wherein the raw material substrate is configured to remain intact during the dealloying treatment.

13. The method according to claim 12, further comprising a step of preparing the first raw material multi-layer body, specifically comprising:

   (1) providing a second raw material multi-layer body, the second raw material multi-layer body comprising:

   a raw material substrate, wherein the raw material substrate has a first surface and a second surface facing away from each other, and the raw material substrate has a dense structure; and
   a second A alloy layer, wherein the second A alloy layer is stacked and bonded to the first surface of the raw material substrate, and a percentage of (M, $\gamma$Mn) phase in the second A alloy layer is 95vol% or above; and
   optionally, a second B alloy layer, wherein the second B alloy layer is stacked and bonded to the first surface of the raw material substrate, and a percentage of (M, $\gamma$Mn) phase in the second B alloy layer is 95vol% or above; and

   (2) performing phase-separation heat treatment on the product of the previous step to form a multi-phase alloy in the second A alloy layer and/or the second B alloy layer, the multi-phase alloy containing $\alpha$Mn phase and (M, $\gamma$Mn) phase, to obtain the first raw material multi-layer body.

14. The method according to claim 13, satisfying one or more of the following characteristics:

   (1) temperature of the phase-separation heat treatment is 500°C-700°C;
   (2) time of the phase-separation heat treatment is 1 hour-4 hours; and
   (3) cooling is performed at a cooling speed of 20°C/s-1000°C/s after the phase-separation heat treatment.

15. An electrode or current collector, comprising the conductive film according to any one of claims 1 to 11.

16. A secondary battery, comprising the electrode or current collector according to claim 15; wherein

    optionally, the secondary battery is an anode-free metal battery; and
    optionally, negative electrode active material of the secondary battery contains a metal or an alloy.

17. An apparatus, comprising the secondary battery according to claim 16, wherein the secondary battery supplies electric energy to the apparatus.

FIG. 1

FIG. 2

20 µm*

Example 1

FIG. 3

3 µm*

Example 2

FIG. 4

FIG. 5

FIG. 6

FIG. 7

FIG. 8

FIG. 9

**4**   5   5

5

FIG. 10

1

FIG. 11

FIG. 12

FIG. 13

## INTERNATIONAL SEARCH REPORT

| | International application No. |
|---|---|
| | **PCT/CN2022/109449** |

**A.    CLASSIFICATION OF SUBJECT MATTER**

H01M 4/64(2006.01)i;  H01M 4/13(2010.01)i

According to International Patent Classification (IPC) or to both national classification and IPC

**B.    FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT, WPI, EPODOC, CNKI: 电池, 负极, 集流体, 集电体, 多孔, 分级, 大孔, 小孔, 锂, 合金, 脱合金, 孔径, battery, anode, collector, porous, lithium, Mn, alloy, dealloy+

**C.    DOCUMENTS CONSIDERED TO BE RELEVANT**

| Category* | Citation of document, with indication, where appropriate, of the relevant passages | Relevant to claim No. |
|---|---|---|
| X | CN 114220947 A (XIAMEN UNIVERSITY) 22 March 2022 (2022-03-22) description, paragraphs 5-42, and figures 1-4 | 1-5, 7-9, 11, 15-17 |
| X | CN 206921926 U (GUANGDONG UNIVERSITY OF TECHNOLOGY) 23 January 2018 (2018-01-23) description, paragraphs 7-16 | 1-5, 7-9, 11, 15-17 |
| Y | CN 114220947 A (XIAMEN UNIVERSITY) 22 March 2022 (2022-03-22) description, paragraphs 5-42, and figures 1-4 | 6, 10, 12-14 |
| Y | CN 114023928 A (TIANJIN UNIVERSITY) 08 February 2022 (2022-02-08) description, paragraphs 5-48 | 6, 10, 12-14 |
| A | CN 108172761 A (CENTRAL SOUTH UNIVERSITY) 15 June 2018 (2018-06-15) entire document | 1-17 |
| A | TW I761099 B1 (HON HAI PRECISION INDUSTRY CO., LTD.) 11 April 2022 (2022-04-11) entire document | 1-17 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 December 2022** | **21 December 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/109449**

| Patent document cited in search report | | | Publication date (day/month/year) | Patent family member(s) | | | Publication date (day/month/year) |
|---|---|---|---|---|---|---|---|
| CN | 114220947 | A | 22 March 2022 | None | | | |
| CN | 206921926 | U | 23 January 2018 | None | | | |
| CN | 114023928 | A | 08 February 2022 | None | | | |
| CN | 108172761 | A | 15 June 2018 | None | | | |
| TW | I761099 | B1 | 11 April 2022 | US | 2022250352 | A1 | 11 August 2022 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CELAL SOYARSLAN et al.** *Acta Materialia*, 2018, vol. 149, 326